# EUROPEAN PATENT APPLICATION

(11) **EP 3 168 646 A1**
(43) Date of publication of application: **17.05.2017**
(21) Application number: 16002283.6
(22) Date of filing: 26.10.2016
(51) Int. Cl.: G01S 19/14, H01Q 1/32, E01C 19/00

(54) **FIXTURE FOR LOCATING AN ANTENNA**

(30) Priority: 10.11.2015 US 201514936805
(71) Applicant: Caterpillar Inc., Peoria, IL 61629 (US)
(72) Inventor: Tallon, David, Peoria, Illinois 61629-9510 (US); Ferguson, Alan, Peoria, Illinois 61629-9510 (US); Piasse, Paul, Peoria, Illinois 61629-9510 (US)
(74) Representative: Boult Wade Tennant

(57) **Abstract**

A fixture (120) for locating the position of an antenna (118). The fixture includes a base (130) having a target mounting structure (138), a target rod (132) defining a target (146) and an engagement structure (128) for mounting the base on the antenna. The engagement structure is configured to align the target mounting structure of the base with a center of the antenna. The target mounting structure configured to support the target rod with the axis of the target rod aligned with a center of the antenna. The target mounting structure further configured to allow axial movement of the target rod.

## Description

### Technical Field

The present disclosure relates to an antenna. In particular, the present disclosure relates to a fixture for locating the position of an antenna.

### Background

Machines such as earth moving machines, construction machines, mining machines or underground mining machines for example a motor grader or an excavator or a track type tractor may include various implements such as a bucket, a blade or other hydro-mechanical implements. The implements are generally manually controlled but may be automatically controlled using a machine control system.

Machine control systems generally need a precise location of an antenna mounted on the machine relative to a ground engaging portion of the implements. Traditionally, the antennas are first removed and then a target is installed in their place to get the precise location. A surveying tool is then used to locate the position of the target and determine the precise coordinates of the antenna with respect to the position of the target.

Such antennas are expensive and are thus mounted in places generally inaccessible or difficult to access so as to thwart any chances of theft or damage. This makes the removal of antenna and installation of a target a very cumbersome process.

US Patent No. 7,812,782 discloses a GPS radome for a construction equipment at a construction site. The GPS radome comprises a GPS radome body enclosing a GPS antenna. The GPS radome body has a reflective material and a plurality of light sources placed at the outer surface of GPS radome body. The reflective material is used as a target for a total station surveying tool and the light sources are used to differentiate between two GPS radomes.

### Summary of the Invention

The present disclosure provides for a fixture for locating a position of an antenna. The fixture includes a base having a target mounting structure, a target rod defining a target and an engagement structure for mounting the base on the antenna. The engagement structure is configured to align the target mounting structure of the base with a center of the antenna. The target mounting structure is configured to support the target rod with the axis of the target rod aligned with a center of the antenna. The target mounting structure further is configured to allow axial movement of the target rod.

The present disclosure further provides for an antenna assembly. The antenna assembly includes an antenna and a fixture for locating a position of the antenna. The fixture includes a base having a target mounting structure, a target rod defining a target and an engagement structure for mounting the base on the antenna. The engagement structure is configured to align the target mounting structure of the base with a center of the antenna. The target mounting structure configured to support the target rod with the axis of the target rod aligned with a center of the antenna. The target mounting structure further configured to allow axial movement of the target rod.

The disclosure provides for a method of locating the position of an antenna. The method includes mounting a fixture having a target mounting structure on the antenna so that the target mounting structure is aligned with a center of the antenna. The method further includes supporting a target rod defining a target on the target mounting structure so that the target rod is aligned with a center of the antenna. The method further includes axially adjusting the target rod so that an end of the target rod opposite the target abuts a surface of the antenna. The method also includes determining a location of the target using a surveying tool.

### Brief Description of the Drawings

FIG. 1 illustrates a side view of an exemplary machine having an antenna assembly mounted thereon.
FIG. 2 illustrates an exploded view of the antenna assembly.
FIG. 3 depicts an assembled view of the antenna and the base.
FIG. 4 shows an assembled view of the antenna, the base and the target rod.
FIG. 5 depicts a method in accordance with an embodiment of the present disclosure.

### Detailed Description

Reference will now be made in detail to embodiments of the invention, examples of which are illustrated in the accompanying drawings. Wherever possible, the same reference numbers will be used throughout the drawings to refer to the same or like parts.

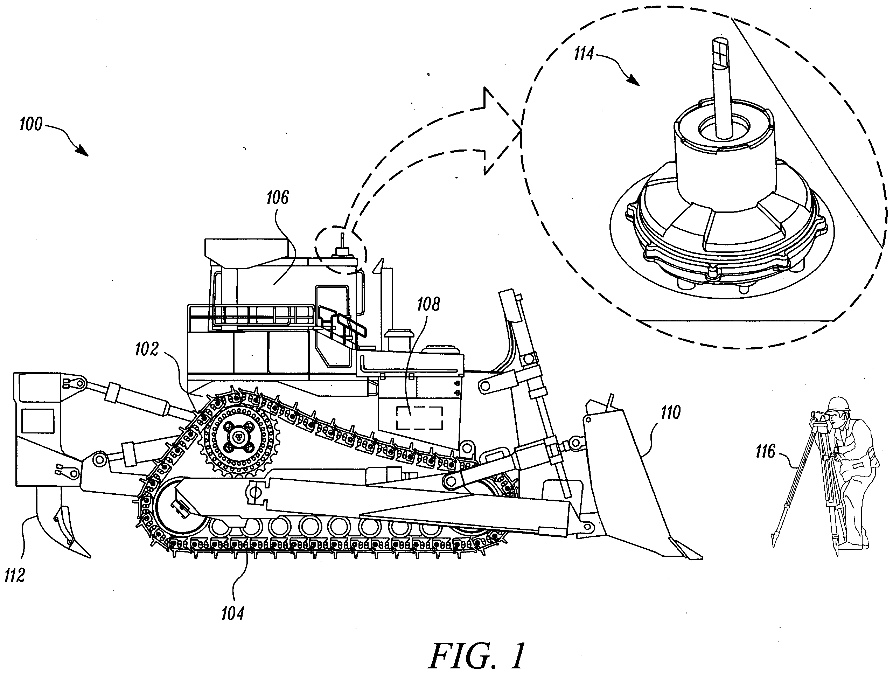

FIG. 1 illustrates an exemplary machine 100. In an exemplary embodiment, the machine 100 may generally include a tractor, a grader, a backhoe, a loader, a haul machine, a dump truck, a compactor or an excavator.

As shown in FIG. 1, the machine 100 may generally include a frame 102 which supports traction devices 104, a cab 106, and a power source 108, such as a hydrostatic drive or an engine, and the like. The machine 100 may further include an implement like a blade 110 and a ripper 112. The machine may further include a position detection device such as an antenna assembly 114 mounted generally on the cab 106.

FIG. 1 also depicts a surveying tool 116. The surveying tool 116 may be any surveying instrument like a total station, any electromagnetic distance measurement device or any other such instrument known in the art.

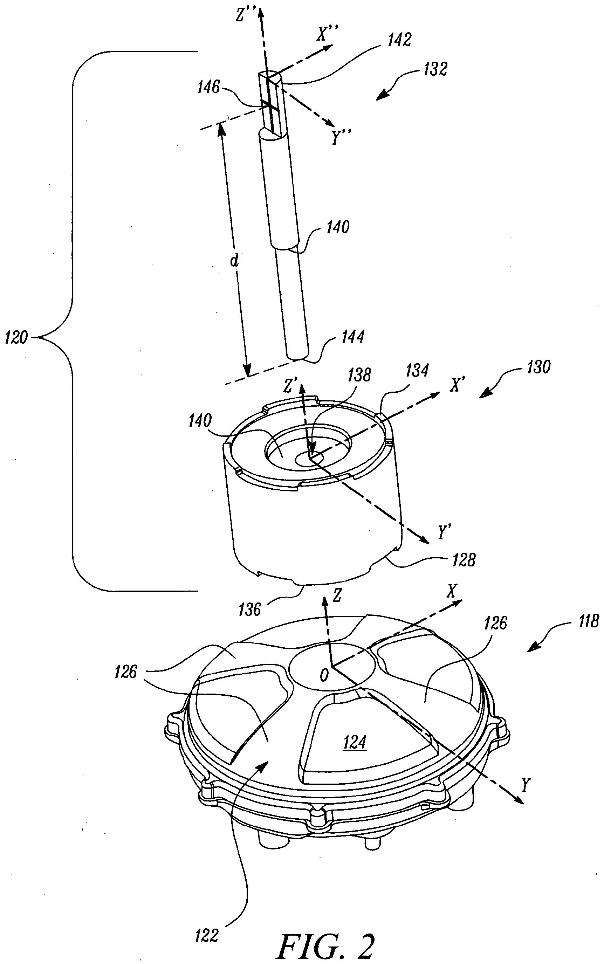

FIG. 2 shows an exploded view of the antenna assembly 114. In an embodiment of the present disclosure, the antenna assembly 114 may include an antenna 118 and a fixture 120. The fixture 120 is configured to be mounted on the antenna 118.

The antenna 118 has a housing 122 enclosing an electronic transducer (not shown in the figure). The housing 122 generally protects the transducer (not shown in the figure) from harsh weather or any other damage due to severe working conditions. The transducer (not shown in the figure) may be a GPS, a GLONASS or any other such global navigation satellite system (GNSS) enabled transducer configured to transmit and receive a signal from a satellites (not shown in the figure) to determine a location of the machine. The housing 122 is generally made of materials having a low dielectric constant. The materials may include composite materials such as fiberglass, quartz and aramid fibers or plastics or any suitable material known in the art.

The housing 122 of the antenna 118 has a surface 124. The surface 124 may include at least one rib feature 126. A center 'O' of the antenna 118 may substantially align (e. g. within assembly tolerances) with a center of the transducer (not shown in the figure). In the embodiment illustrated in FIG. 2, the antenna 118 is generally circular. The antenna 118 extends along the X-Y-Z directions from the center 'O'. The transducer may be placed at the intersection of the X-Y axis. The distance in the Z direction between the transducer and the surface 124 is fixed and is generally known for each antenna.

The rib feature 126 may be a protrusion, a bump, a protuberance, a bulge or any such projection formed on the surface 124 of the housing 122 of the antenna 118. The rib feature 126 may be made during a manufacturing process of the antenna 118 or of the housing 122. The manufacturing process may include casting, molding, forming, machining, 3D printing or any other such process known in the art.

The rib feature 126 may be configured to engage with any other structure having a notch, an indentation, a depression, a dent, a cavity, a trough or any other such recess. In an embodiment, the rib feature 126 is configured to engage with an engagement structure 128 defined on the fixture 122.

With reference to FIG. 1 and FIG. 2, the fixture 120 may include a base 130 and a target rod 132. The fixture 120 may be a single part also or an assembled part as considered here. The fixture may be made of metal, alloys, plastics, composites or any other suitable material known in the art. The base 130 may include a first end 134 and a second end 136. The base further includes the engagement structure 128 and a target mounting structure 138.

The engagement structure 128 is configured to receive a feature on the antenna 118. The engagement structure 128 may be sized to provide a close fit with a feature of the antenna 118 so as to provide a precise mounting of the fixture 120 on the antenna 118. The engagement structure 128 may be formed at the first end 134, or proximate the first end 134. The engagement structure 128 may be a notch, an indentation, a depression, a dent, a cavity, a trough or any other such recess. Furthermore, the engagement structure 132 may be an intermediate structural part coupled to the base and having a notch, an indentation, a depression, a dent, a cavity, a trough or any other such recess.

The geometric orientation of the base 130 may be defined along the X'-Y'-Z' axes. The engagement of the engagement structure 128 of the base 130 with the rib feature 126 on the surface 124 of the housing 122 of the antenna 118 ensures alignment (e.g. within assembly tolerances) of the Z axis of the antenna 118 with the Z' axis of the base 130.

The target mounting structure 138 may be a cavity or an opening formed on the base 130. In an embodiment, the target mounting structure 138 may be at the second end 136 of the base 130. The target mounting structure 138 may be configured to receive the target rod 132. In an embodiment, the target mounting structure 138 is configured to support the target rod 132 with the axis of the target rod 132 aligned (e.g. within assembly tolerances) with the center 'O' of the antenna 118. The target mounting structure 138 is further configured to allow axial movement of the target rod 132. The target mounting structure 138, the target rod 132 or both may further include a stop 140 to limit an axial movement of the target rod 132 inside the target mounting structure 138. The target mounting structure 138 is configured to align (e.g. within assembly tolerances) the target rod 132 with the Z axis of the antenna 118. In alternate embodiments, the target mounting structure 138 is configured to align (e.g. within assembly tolerances) the target rod 132 with the Z axis of the antenna 118 and the Z' axis of the base 130.

The target rod 132 may have a proximal end 142 and a distal end 144. The target rod 132 may be made as a single unit or as an assembly. The target rod 132 may be a hollow or solid or semi-solid structure. The embodiment shown in FIG. 2 has a circular target rod 132 with a flat surface formed on the proximal end 142 and a target 146 formed on the flat surface.

The target 146 may be formed near the proximal end 142 of the target rod 132. The target 146 may be at a constant distance 'd' from the distal end 144. The target 146 may be a reflecting surface configured to reflect back any optical ray or electromagnetic wave directed at it from a source and may include a strip made of a retroreflective material or a crosshair or any such marking of any other shape known generally in the art for calibration or sighting reference. The source may be any general source like a bulb or led or an electromagnetic source or an infrared source and includes amplified/coherent light sources like a laser.

The distal end 144 of the target rod 132 may be configured to be supported by the target mounting structure 138 and axially move therein. In the embodiment of FIG. 2, the target mounting structure 138 is an opening and the target rod 132 is configured to be placed in the opening. The target rod 132 may be of such length so that the target 146 may be easily visible for a surveyor even after placement of the target rod 132 in the target mounting structure 138.

The target rod 132 together with the target mounting structure 138 may enable the axial movement of the target rod 132. The movement of the target rod 132 along the Z' axis may be limited by the stop 140 of the target mounting structure 138. In alternate embodiments, the stop 140 may be on the target rod 132 itself and limits the axial movement thereby.

The axial movement of the target rod 132 may ensure the abutment of the distal end 144 on the surface 124 of the housing 122 of the antenna 118. Further, the distal end 144 may abut the center 'O' of the antenna 118. This may further allow the alignment (e.g. within assembly tolerances) of the axes X"-Y"-Z" of the target rod 132 with the respective axes X-Y-Z of the antenna 118.

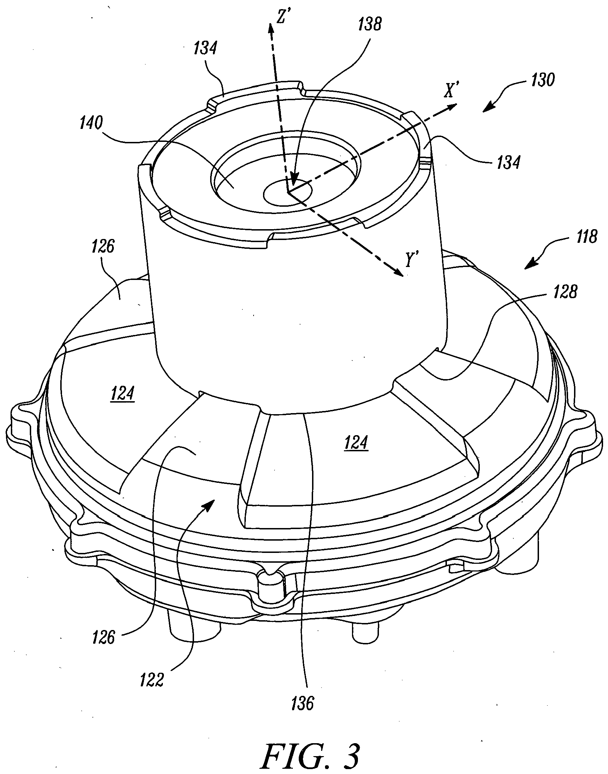

Referring to FIG. 3, the mounting and assembling of the base 130 on the antenna 118 is depicted. As shown, the engagement structure 128 of the base 130 may be received by the rib feature 126 of the surface 124 of the housing 122 of the antenna 118. In an embodiment, both the engagement structure 128 and the rib feature 126 may be so formed as to allow a close fit between them. This close fit engagement facilitates the alignment (e.g. within assembly tolerances) of the axes X-Y-Z of the antenna 118 with the axes X'-Y'-Z' of the base 130.

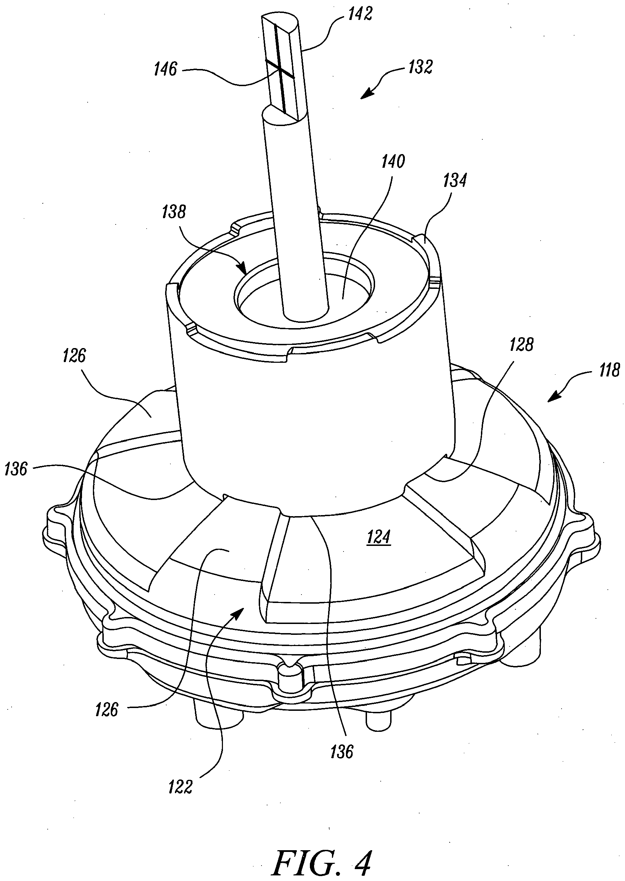

Referring to FIG. 4, the target rod 132 is placed on the base 130. As illustrated in this embodiment, the base 130 is mounted on the antenna 118 and the target rod 132 is supported by the target mounting structure 138 of the base 130.

The assembled arrangement shown in FIG. 4 may enable the alignment (e.g. within assembly tolerances) of the target 146 with the center 'O' of the antenna 118. In other words, the assembly of the base 130 on the antenna 118 and the supporting of the target rod 132 on the base 130 may enable a mapping of directional values of all the three axes of the antenna 118 and the target rod 136.

### Industrial Applicability

The present disclosure provides for a fixture 120 that facilitates locating the position of the antenna 118. The disclosure provides for enabling a person to locate the position of the antenna 118 without removal of the antenna 118.

In an aspect of the present disclosure, the assembled arrangement shown in FIG. 4 may be used to locate the position of the antenna 118. After the target rod 132 is supported by the target mounting structure 138 of the base 130, the surveying tool 116 may be used to locate the target 152. The location of the surveying tool 116 may be determined by conventional surveying methods and thus the location of the target 146 may be respectively identified. This location identification may include the measurement of the directional values of X, Y and Z directions. The X, Y and Z directional values of the target 146 may be thus identified using the surveying tool 116.

As all the respective axes of the antenna 118 and the target rod 132 are aligned (e.g. within assembly tolerances) with each other, the X and Y directional values of the target 146 may be used as the X and Y direction values of the antenna 118. The Z directional value of the target 146 along with the constant distance 'd' between the target 146 and the distal end 144 of the target rod 132 may be further used to determine the Z directional value of the antenna.

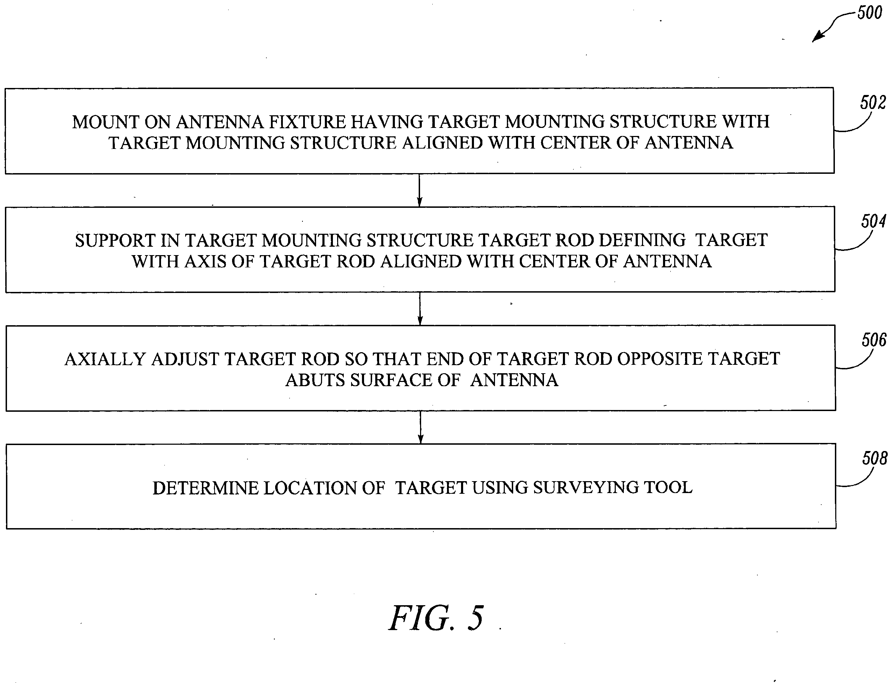

In yet another aspect of the present disclosure, a method 500 for locating the position of the antenna 118 is disclosed. Referring to FIG. 5, the method 500 includes following steps. In step 502, the fixture 120 having the base 130 is mounted on the antenna 118. The target mounting structure 138 of the base 130 is also aligned (e.g. within assembly tolerances) during the mounting with the center 'O' of the antenna 118. In step 504, a target rod 132 having a target 146 is supported by the target mounting structure 138. The axis Z" of the target rod 132 is aligned (e.g. within assembly tolerances) with the center 'O' of the antenna 118. In step 506, the target rod 132 having a target 146 is axially adjusted along the Z" axis. Further, the distal end 144 of the target rod 132 abuts the surface 124 of the antenna 118 after being axially adjusted. In step 508, the location of the target 146 is determined using a surveying tool 116.

In an embodiment, the disclosed method 500 may further include determining the location of the antenna 118 using the location of the target 146. In an embodiment, the location of the target 146 may include the X, Y and Z directional values of the target 146. The X, Y and Z direction may be further used to locate the X, Y and Z direction values of the antenna 118.

The X and Y values of both the target 146 and the antenna 118 may be equal as the axes of both the target rod 132 having the target 146 and the antenna 118 may be aligned (e.g. within assembly tolerances). The alignment (e.g. within assembly tolerances) of the X and Y axes may be done during the mounting of the fixture 120 on the antenna 118.

Additionally, the axial adjustment of the target rod 132 may allow for the target rod 132 to float in the target mounting structure 138. The floating nature of the target rod 132 ensures that the distal end 144 of the target rod 132 abuts the surface 124 of the antenna 118. Also, the floating nature of the target rod 132 allows the abutting of the distal end 144 of the target rod 132 even when dust, debris or any other foreign matter on the surface 124 of the antenna 118 impedes the receiving of the engagement structure 128 of the base 130 by the rib feature 126 of the surface 124 of the antenna 118.

The removable nature of the fixture 120 allows it to be stored while not in use. In an embodiment, the fixture 120 may be removed and stored with the surveying tool 116. The fixture 120 may be interchangeable and may be used for antennas of different machines. This obviates the need for designing different fixtures for antennas of different machines.

While aspects of the present disclosure have seen particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof

## Claims

1. A fixture for locating the position of an antenna, the fixture comprising:
a base having a target mounting structure;
a target rod defining a target; and
an engagement structure for mounting the base on an antenna; the engagement structure configured to align the target mounting structure of the base with a center of the antenna; the target mounting structure configured to support the target rod with the axis of the target rod aligned with a center of the antenna, the target mounting structure further configured to allow axial movement of the target rod.

2. The fixture of claim 1, wherein the engagement structure is formed on the base.

3. The fixture of claim 1, wherein the engagement structure includes a notch formed on the base configured to receive a rib feature of an antenna.

4. The fixture of claim 1, wherein the target mounting structure includes an opening defined on the base.

5. The fixture of claim 1, wherein the target comprises a reflecting surface.

6. The fixture of claim 1, wherein one of the base and the target rod comprises a stop configured to restrict axial movement of the target rod within the base.

7. The fixture of claim 1, wherein the target is at a constant distance from an end of the target rod opposite the target.

8. An antenna assembly comprising:
an antenna; and
a fixture for locating a position of the antenna, the fixture including:
a base having a target mounting structure;
a target rod defining a target; and
an engagement structure for mounting the base on the antenna; the engagement structure configured to align the target mounting structure of the base with a center of the antenna; the target mounting structure configured to support the target rod with the axis of the target rod aligned with a center of the antenna, the target mounting structure further configured to allow axial movement of the target rod.

9. The antenna assembly of claim 8, wherein the engagement structure is formed on the base.

10. The antenna assembly of claim 8, wherein the engagement structure includes a notch formed on the base configured to receive a rib feature of an antenna.

11. The antenna assembly of claim 8, wherein the target mounting structure includes an opening defined on the base.

12. The antenna assembly of claim 8, wherein the target comprises a reflecting surface.

13. The antenna assembly of claim 8, wherein one of the base and the target rod comprises a stop configured to restrict axial movement of the target rod within the base.

14. The antenna assembly of claim 8, wherein the fixed target is at a constant distance from an end of the target rod.

15. A method of locating the position of an antenna comprising:
mounting on the antenna a fixture having a target mounting structure with the target mounting structure aligned with a center of the antenna;
supporting in the target mounting structure a target rod defining a target with an axis of the target rod aligned with a center of the antenna;
axially adjusting the target rod so that an end of the target rod opposite the target abuts a surface of the antenna; and
determining a location of the target using a surveying tool.

16. The method of claim 15, wherein determining the location of the target comprises obtaining an X, Y and Z direction values for the target.

17. The method of claim 16, wherein an X and Y direction values of the antenna are the X and Y direction values of the target.

18. The method of claim 16, wherein a Z direction value of the antenna is based on the constant distance between the target and the end of the target rod opposite the target and the Z direction value of the target.
